# EUROPEAN PATENT SPECIFICATION

(11) **EP 2 048 736 B1**
(45) Date of publication and mention of the grant of the patent: **22.09.2010**
(21) Application number: 08165876.7
(22) Date of filing: 06.10.2008
(51) Int. Cl.: H01M 10/42, H01M 10/38

(54) **Lithium secondary battery**
Lithium-Sekundärbatterie
Batterie secondaire au lithium

(30) Priority: 09.10.2007 KR 20070101657
(43) Date of publication of application: 15.04.2009
(73) Proprietor: Samsung SDI Co., Ltd., Suwon-si Gyeonggi-do (KR)
(72) Inventor: Hwang, Cheolhee, Gyeonggi-do (KR); Lim, Wanmook, Gyeonggi-do (KR); Bak, Hyorim, Gyeonggi-do (KR); Lee, Myungro, Gyeonggi-do (KR); Chang, Youngchurl, Gyeonggi-do (KR)
(74) Representative: Hengelhaupt, Jürgen

(56) References cited:
- US-A- 5 925 482
- US-A1- 2006 115 736
- US-A1- 2006 281 012

## Description

The present disclosure relates to a lithium secondary battery. More specifically, the present invention relates to a lithium secondary battery that remains stable even upon penetration of a sharp object into the battery.

### Description of the Related Art

Generally, a secondary battery is rechargeable and can be miniaturized, while exhibiting a large capacity. In recent years, increasing demands for portable electronic equipment, such as camcorders, portable computers, and mobile phones, have led to active research and development of secondary batteries as an energy source for the portable electronic equipment. Among these secondary batteries, a great deal of attention has focused on nickel-metal hydride (Ni-MH) batteries, lithium ion (Li-ion) batteries, and lithium ion polymer batteries.

Lithium, which is widely used as a material for a secondary battery, has a low atomic weight and is therefore suitable for fabrication of a battery having a high electrical storage capacity per unit mass. Further, as lithium reacts violently with water, a lithium-based battery usually employs a non-aqueous electrolyte. The lithium-base battery can advantageously generate an electromotive force of about 3 to 4 volts because it is not affected by a water electrolysis voltage.

Abuse and misuse of lithium secondary batteries have raised concerns associated with the stability of the battery. In particular, there are increasing cases in which internal short-circuiting takes place upon penetration of a sharp object into the lithium secondary battery due to an external impact, which causes accidental fires, which can result in injury or death. In order to cope with the current situation, many attempts and efforts have been made to improve the stability of the battery. However, it is currently difficult to ensure the stability of the battery due to frequent occurrence of ignition under severe conditions such as penetration of a sharp object such as a fine pin into the secondary battery.

US 5,925,482 provides a lithium-ion secondary battery comprising a positive electrode plate respectively negative electrode plate each having an active material only on a single face of a collector foil. A resin separator is arranged between the electrode plates such that the active sites of the negative and positive electrode plates face each other. US 2006/0281012 A1 discloses among others a lithium-ion secondary battery including a separator made of a ceramic material.

### SUMMARY OF THE INVENTION

Therefore, in view of the above and other problems, it is an object to provide a lithium secondary battery that is capable of significantly increasing stability of the battery even when internal short-circuiting takes place due to penetration of a sharp object into the battery.

According to a first embodiment of the invention, there is provided a lithium secondary battery, comprising an electrode assembly comprising a first electrode plate, a second electrode plate, and a separator comprising a ceramic material and being disposed between the first electrode plate and the second electrode plate, wound together such that an outermost portion of the first electrode plate is disposed farther outside the electrode assembly than an outermost part of the second electrode plate; and a can dimensioned and configured for receiving the electrode assembly. The polarity of the first electrode plate is opposite to a polarity of the can.

Further, the first electrode plate comprises an electrode current collector and an electrode active material layer coated thereon, and at least 1 turn of an outermost portion of the first electrode plate consists of only the electrode current collector and the separator.

Preferably, a shortest distance from the outermost 1 turn of the first electrode plate to the can has a substantially constant value around a circumference of the can. A tangent plane to the outermost 1 turn of the first electrode plate and a tangent plane at a point of the can, joined by an imaginary line defining the shortest distance therebetween, may be (substantially) parallel to each other.

The separator is preferably made of a porous film comprising the ceramic material and a binder. The ceramic material may be at least one of silica (SiO₂), alumina (Al₂O₃), zirconium oxide (ZrO₂) or titanium oxide (TiO₂).

According to a second embodiment of the invention, there is provided a lithium secondary battery, comprising an electrode assembly comprising a first electrode plate, a second electrode plate, and a separator disposed between the first electrode plate and the second electrode plate, wound together such that an outermost portion of the first electrode plate is disposed farther outside the electrode assembly than an outermost part of the second electrode plate; and a can dimensioned and configured for receiving the electrode assembly, wherein a polarity of the first electrode plate is opposite to a polarity of the can. The lithium secondary battery is being characterized in that the lithium secondary battery further comprises a short-circuiting part coupled to an outermost portion of the first electrode plate, wherein the short-circuiting part surrounds by at least one turn the outermost portion of the electrode assembly and comprises an electrode portion and an insulating portion coated thereon.

Preferably, a shortest distance from the outermost 1 turn of the electrode portion to the can has a substantially constant value around a circumference of the can. A tangent plane to the outermost 1 turn of the electrode portion and a tangent plane at a point of the can, joined by an imaginary line defining the shortest distance therebetween, are substantially parallel to each other.

The insulating portion is preferably made of a porous film comprising the ceramic material and a binder. The ceramic material may be at least one of silica (SiO₂), alumina (Al₂O₃), zirconium oxide (ZrO₂) or titanium oxide (TiO₂). The insulating portion and the separator are preferably made of the same material. The insulating portion may be adjacent to and contacting the outermost end of the separator and the electrode portion may be adjacent to and contacting the first electrode plate.

Preferably, the first electrode plate comprises an electrode current collector and an electrode active material layer coated thereon and the electrode portion is thicker than the current collector of the first electrode plate. In alternative, the first electrode plate comprises an electrode current collector and an electrode active material layer coated thereon and the electrode portion is made of a material having a higher electrical conductivity than the current collector of the first electrode plate. In that embodiment, the electrode portion is preferably thinner than the current collector of the first electrode plate. The electrode portion and the current collector of the first electrode plate may comprise the same material.

### BRIEF DESCRIPTION OF THE DRAWINGS

The above and other objects, features, and other advantages will be more clearly understood from the following detailed description taken in conjunction with the accompanying drawings, in which:
FIG. 1 is a schematic exploded perspective view of an embodiment of a lithium secondary battery;
FIG. 2 is a schematic longitudinal cross-sectional view showing a can of FIG. 1 in which an electrode assembly is housed;
FIG. 3 is a schematic cross-sectional view showing an electrode assembly housed in a can of FIG. 1;
FIG. 4 is a schematic cross-sectional view showing another embodiment of an electrode assembly housed in a can;
FIG. 5 is an enlarged view of area V of FIG. 4;
FIG. 6 is a sectional view showing another embodiment of an electrode assembly housed in a can; and
FIG. 7 is a sectional view schematically showing a nail penetration test for a lithium secondary battery.

### DETAILED DESCRIPTION OF CERTAIN EMBODIMENTS

Now, certain embodiments will be described in more detail with reference to the accompanying drawings, which, as will be understood by those skilled in the art, to which various modifications, additions, and substitutions are possible without departing from their scope and spirit. Unless otherwise defined, all technical and scientific terms used herein have the same meaning as commonly understood by one of ordinary skill in the relevant art. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein. Well-known functions or constructions may not be described in detail for brevity and/or clarity. Like numbers refer to like elements throughout the specification and drawings. In the figures, the thickness of certain layers, regions and areas may be exaggerated for clarity.

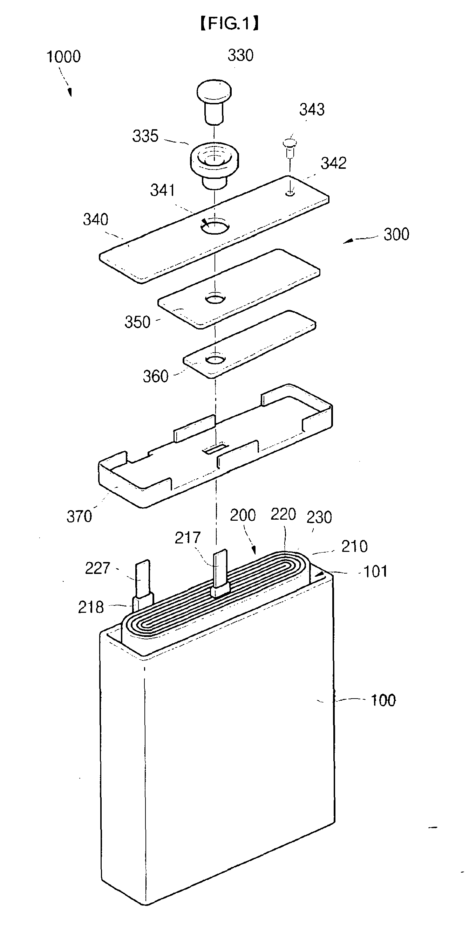

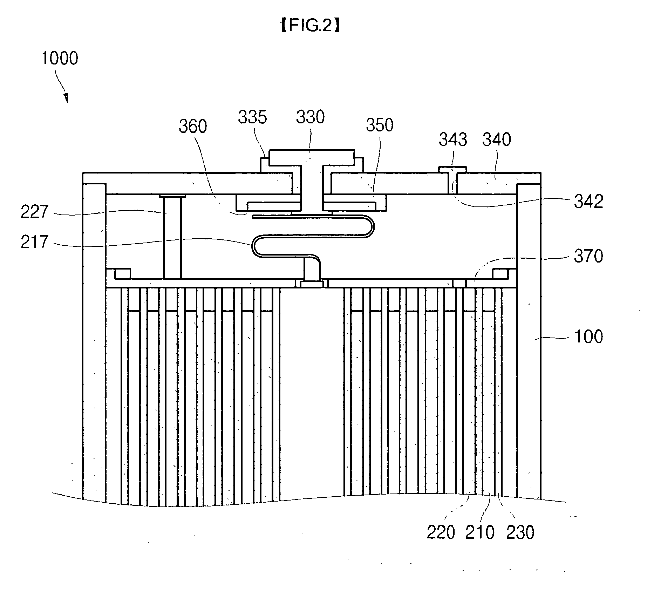

FIG. 1 is a schematic exploded perspective view of an embodiment of a lithium secondary battery, and FIG. 2 is a schematic longitudinal cross-sectional view showing a can 100 into which an electrode assembly is housed in FIG. 1. In this connection, even though a prismatic lithium secondary battery is shown in FIG. 1, the present invention is not limited to prismatic secondary batteries and may also be applied to cylindrical lithium secondary batteries or pouch type secondary batteries which also fall within the scope of the present invention.

Referring to FIGS. 1 and 2, an embodiment of a lithium secondary battery 1000 comprises a can 100 and an electrode assembly 200 housed in the can 100. Further, as shown in FIG. 1, the can-type secondary battery 1000 in accordance with the present embodiment may further comprise a cap assembly 300, which seals tightly an upper opening 101 of the can 100.

The can 100 may be formed of a generally rectangular-shaped metal material, which may also serve as an electrode terminal. However, the shape of the can 100 is not limited thereto. A polarity of the can is opposite to that of a first electrode plate 210, as will be illustrated hereinafter. Further, although not shown in FIG. 2, the can 100 may be equipped with a heat radiation area-extension portion with a shape that provides an enlarged heat radiation area, such that heat generated inside the can 100 can be further radiated to the outside. The can 100 includes an upper opening 101 formed on one side thereof, and the electrode assembly 200 is received through the upper opening 101.

Referring to FIG. 2, the can 100 is disposed proximally or adjacent to a first electrode plate 210 of the electrode assembly 200, as will be illustrated hereinafter. That is, the outermost part of the first electrode plate 210 is positioned closer to the can 100 than a second electrode plate 220 is to the can 100.

The electrode assembly 200 includes the first electrode plate 210, the second electrode plate 220, and a separator 230. The separator 230 is interposed between the first electrode plate 210 and the second electrode plate 220, and the resulting structure is wound in the form of a jelly roll.

The separator 230 comprises a porous material that serves to block electron conduction between the first electrode plate 210 and the second electrode plate 220 that might otherwise occur in the electrode assembly 200, and is capable of achieving smooth migration of lithium ions. For example, the separator 230 may comprise polyethylene (PE), polypropylene (PP), and/or a composite material film thereof. In an embodiment of the lithium secondary battery, the separator 230 comprises a ceramic material coated on the first electrode plate 210. Details of the ceramic separator will be illustrated hereinafter.

The first electrode plate 210 may be either a positive electrode plate or a negative electrode plate. The polarity of the first electrode plate 210 is opposite to the polarity of the can 100. Therefore, when the polarity of the can 100 is positive, the polarity of the first electrode plate 210 is negative, or vice versa. Furthermore, the polarity of the second electrode plate 220 is to opposite to the polarity of the first electrode plate 210.

Further, an outermost part or portion of the first electrode plate 210 is disposed on an outside of the electrode assembly 200, thus being located farther outward than an outermost part or portion of the second electrode plate 220. Therefore, the battery is configured such that the can 100 preferentially short-circuits with the first electrode plate 210, when a sharp object penetrates the can 100.

On the other hand, a cap assembly 300 includes a cap plate 340, an insulating plate 350, a terminal plate 360, and an electrode terminal 330. The cap assembly 300 is insulated from the electrode assembly 200 by a separate insulating case 370 where it engages the upper opening 101 of the can 100, thereby sealing the can 100.

The cap plate 340 comprises a metal plate having a size and a shape corresponding to the upper opening 101 of the can 100. At about the center of the cap plate 340 is formed a terminal through-hole 341 having a given size through which the electrode terminal 330 is inserted. A tubular gasket 335 that insulates the electrode terminal 330 from the cap plate 340 is disposed between the terminal through-hole 341 the outer surface of the electrode terminal 330. One side of the cap plate 340 is provided with an electrolyte inlet 342 having a given size, and the other side of the cap plate 340 may be provided with a safety vent (not shown). The safety vent is integrally formed with the cap plate 340 by making a thinner portion of the cap plate 340. After assembling the cap assembly 300 to the upper opening 101 of the can 100, an electrolyte is injected via the electrolyte inlet 342, which is then closed with a stopper 343.

The electrode terminal 330 is coupled and/or connected to a first electrode tap 217 of the first electrode plate 210 or a second electrode tap 227 of the second electrode plate 220, thereby serving as a first electrode terminal or a second electrode terminal. In order to prevent short-circuiting, insulating tapes 218 are wound on portions of the first electrode tap 217 and the second electrode tap 227 extending from the electrode assembly 200.

Meanwhile, the remaining configuration of the lithium secondary battery is of any suitable design known in the art, and a description thereof is omitted hereinafter.

Hereinafter, an embodiment of a lithium secondary battery is described in more detail.

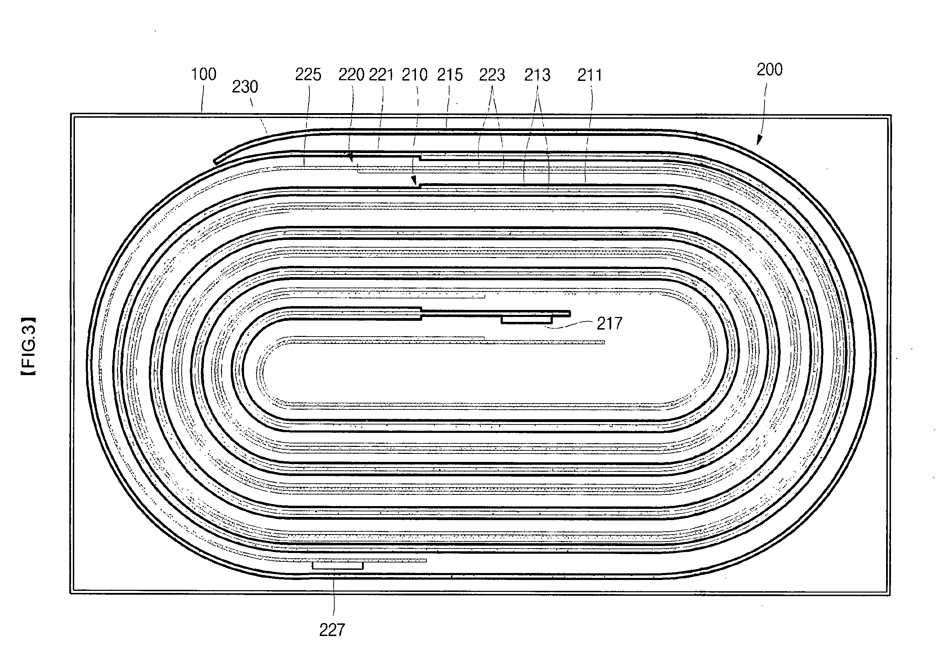

FIG. 3 is a schematic cross-sectional view of the battery illustrated in FIG. 1, showing the electrode assembly 200 housed in the can 100.

Referring to FIG. 3, as discussed above, in embodiments in which a polarity of the first electrode plate 210 is negative, the first electrode plate 210 includes a first electrode current collector 211 comprising thin copper foil, and a first electrode active material layer 213, comprising a carbon material as a main ingredient, coated on both sides of the first electrode current collector 211. In the first electrode current collector 211, both ends of the first electrode plate 210 comprise first electrode uncoated areas 215 in which the first electrode active material layer 213 is not coated on one or both sides of the first electrode current collector 211. The uncoated area 215 at a central end of the first electrode plate 210 is coupled with a first electrode tap 217.

In embodiments in which the first electrode plate 210 is a negative electrode, the second electrode plate 220 is a positive electrode. Here, the second electrode plate 220 includes a second electrode current collector 221 comprising thin aluminum foil and a second electrode active material layer 223 comprising a lithium-based oxide as a main ingredient coated on both sides of the second electrode current collector 221. In the second electrode current collector 221, both ends of the second electrode plate 220 comprise second electrode uncoated areas 225 in which the second electrode active material layer 223 is not coated on one or both sides of the second electrode current collector 221. The uncoated area 225 at an outermost end of the second electrode plate 220 is coupled with a second electrode tap 227.

The ceramic separator 230 comprises a ceramic separator disposed and/or coated on the first electrode plate 210 for insulation between the first and second electrode plates 210, 220. In this connection, as discussed above, the separator in the lithium secondary battery in accordance with the illustrated embodiment includes a porous film comprising a ceramic material and a binder. The ceramic separator 230 may be formed by coating the porous film on the electrode plate.

The ceramic material comprises at least one of silica (SiO₂), alumina (Al₂O₃), zirconium oxide (ZrO₂), titanium oxide (TiO₂) and any combination thereof. The binder may comprise an acrylic rubber having a three-dimensional crosslinked structure.

For formation of the separator, the ceramic material and the acrylic rubber binder having a crosslinked structure are mixed in a solvent to thereby prepare a paste, and the resulting paste is then coated on at least one of the electrode plates 210, 220 to form a ceramic separator 230.

That is, the ceramic separator 230 may be coated and formed on either or both of the first electrode plate 210 and the second electrode plate 220, because it is sufficient that the ceramic separator 230 prevents an internal short-circuiting between the first electrode plate 210 and the second electrode plate 220. Further, the ceramic separator 230 may be coated and formed on either or both sides of the first electrode plate 210 and/or the second electrode plate 220. Coating may be carried out by dipping the electrode plate in a solution of the porous film.

The ceramic separator 230 plays a role of a typical film-like separator formed of polyethylene (PE), polypropylene (PP), or the like. The ceramic material has a decomposition temperature of more than about 1000 °C due to its intrinsic nature, and the acrylic rubber binder has a decomposition temperature of more than 250 °C due to its crosslinked structure, so it is possible to obtain a battery with a high thermal resistance.

On the other hand, in the lithium secondary battery in accordance with the illustrated embodiment, the outermost part of the first electrode plate 210 is disposed on the outside of the electrode assembly 200, thus being located farther out than the outermost part of the second electrode plate 220, and the first electrode plate 210 has an opposite polarity from the can 100. Accordingly, in order to prevent short-circuiting between the can 100 and the first electrode plate 210, the ceramic separator 230 is disposed to surround the outermost part of the electrode assembly 200.

Meanwhile, in the lithium secondary battery in accordance with an embodiment, the first electrode plate 210 located at the outermost part of the electrode assembly 200 comprises at least about 1 turn of the first electrode uncoated area 215. More preferably, the first electrode uncoated area 215 comprises only the electrode current collector 211 to thereby provide a complete outermost one turn. In this case, the first electrode uncoated area 215 does not include the first electrode active material layer 213 having a relatively high resistance, so an electric current flowing between the electrode plate and a penetrating object, such as a nail and/or pin, is more effectively dissipated towards the external can, upon penetration of a sharp object into the lithium secondary battery.

As described above, the lithium secondary battery in accordance with an embodiment features the ceramic separator 230 in conjunction with opposite polarities between the can 100 and the first electrode plate 210 located at the outermost part of the electrode assembly 200. As a result, when an external object penetrates into the battery by external impact, the ceramic separator reduces and/or prevents melting of the separator due to heat generation, which occurs upon the penetration of a sharp object into the lithium secondary battery, and which consequently, reduces and/or prevents the propagation of internal short-circuiting. When the can and the first electrode plate 210 are first short-circuited, the electric current concentrated at the penetrated portion of the battery is smoothly distributed into the can. As a result, the stability of the lithium secondary battery is dramatically enhanced.

Hereinafter, a lithium secondary battery in accordance with another embodiment will be described in more detail.

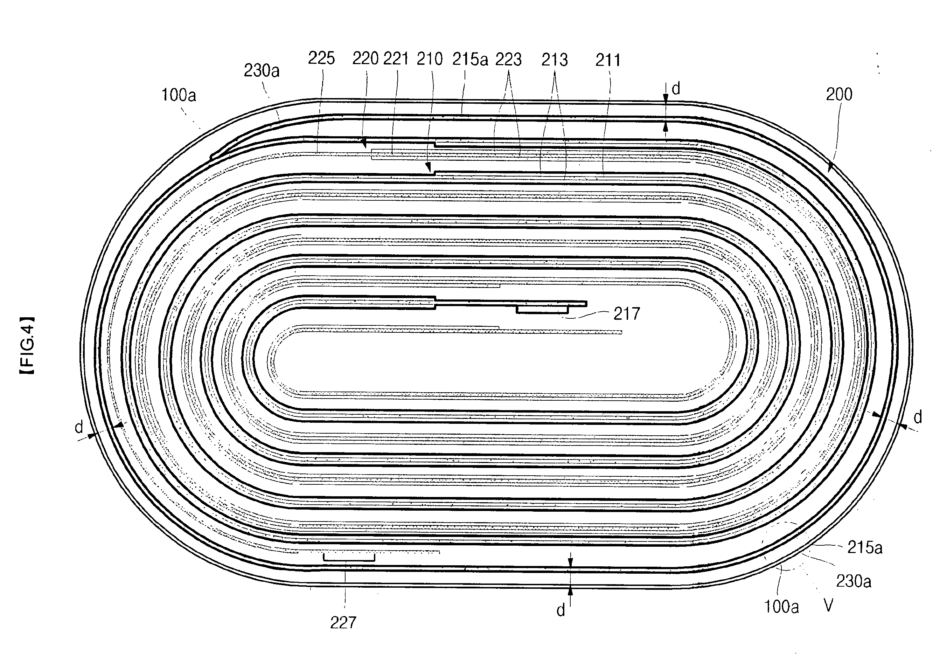

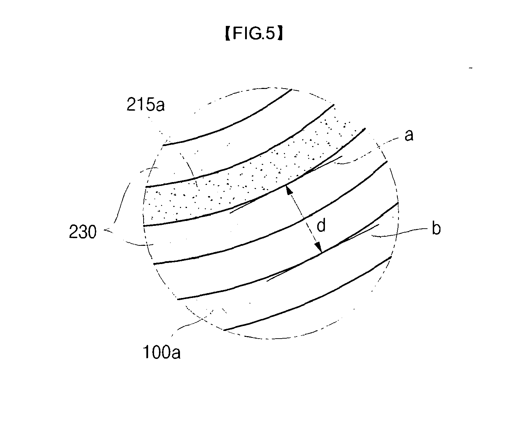

FIG. 4 is a schematic cross-sectional view showing an electrode assembly housed in a can 101a, in a lithium secondary battery in accordance with another embodiment, and FIG. 5 is an enlarged view of area V of FIG. 4.

In the present embodiment, like parts in previous embodiment (including related figures) are identified by like numbers. Herein, in the lithium secondary battery in accordance with the present embodiment, a can 100a and a ceramic separator 230a are different from the lithium secondary battery of the previous embodiment.

Referring to FIG. 4, corners of the can 100a in the lithium secondary battery in accordance with the illustrated embodiment are rounded. Further, the ceramic separator 230a surrounding the outermost part of the electrode assembly contacts the ceramic separator 230a of the previous turn of the electrode assembly. Accordingly, slippage of the electrode assembly 200 inside the can 100 is more efficiently inhibited.

Meanwhile, the can 100a is rounded, such that the shortest distance (d) from a point on an outer circumferential surface of the can 100a to the first electrode uncoated area 215a disposed at the outermost part of the first electrode plate 210 has substantially the same value. More specifically, referring to FIG. 5, the can 100a is configured such that a tangent plane *a* at a given point of the first electrode uncoated area, and a tangent plane *b* at a given point of an inner surface of the can are substantially parallel to each other when joined by an imaginary line defining the shortest distance between the first electrode uncoated area 215a and the can 100a.

That is, upon penetration of a sharp object into the lithium secondary battery, a depth of penetration of the object into the battery has substantially little or no significant deviation. As a result, the penetration depth of the object is more predictable. Consequently, the stability of the lithium secondary battery is further enhanced. Further, a rounded can results in an increase in the relative capacity of the electrode assembly and an improved flexibility in layout design.

Hereinafter, a lithium secondary battery in accordance with yet another embodiment will be described in more detail.

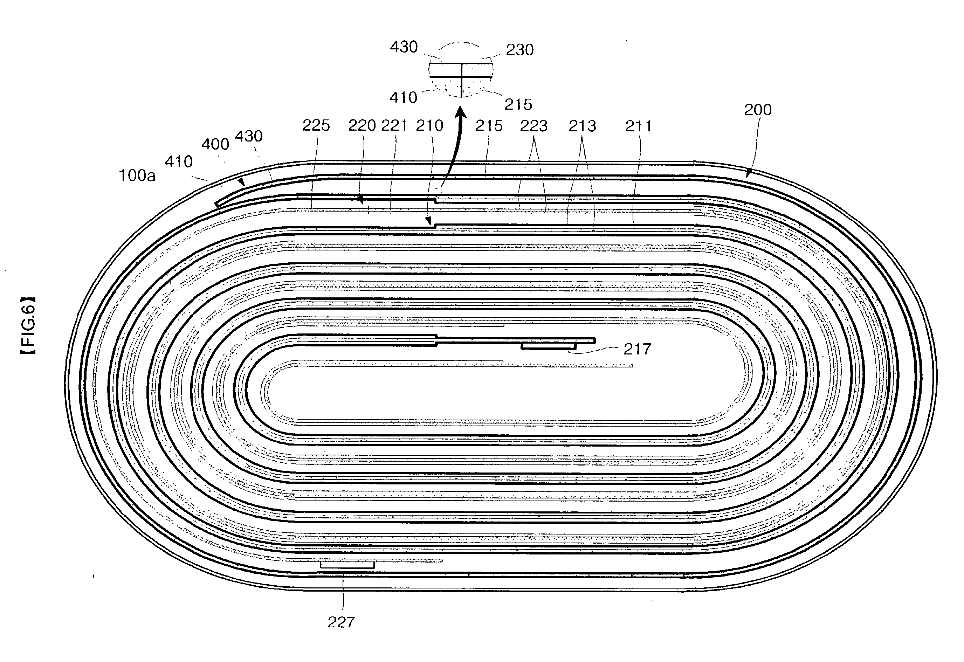

FIG. 6 is a cross-sectional view showing an electrode assembly housed in a can 100a, of a lithium secondary battery in accordance with yet another embodiment. In the present embodiment, like parts in previous embodiment (including related figures) are identified by like numbers. Herein, the lithium secondary battery in accordance with the present embodiment comprises a short-circuiting part 400.

The short-circuiting part 400 includes an electrode portion 410, which is coupled to an end of the first electrode current collector 211 positioned at the outermost area of the first electrode plate 210, and an insulating portion 430, which is adjacent to and contacts the separator 230 in a region opposite to the electrode current collector 211 positioned in the outermost area of the first electrode plate 210. The insulating portion 430 is adjacent to and contacts the outermost end of the separator 230, and may comprise the same material as that of the separator 230, as illustrated in the enlarged view in FIG. 6.

The electrode portion 410, may be comprise the same material as the first electrode uncoated area 215 described above. The electrode portion 410 may be thicker than the first electrode uncoated area 215 to thereby further facilitate dissipation of an electric current generated upon the penetration of a sharp object into the lithium secondary battery.

Further, the electrode portion 410 may comprise a material different from the first electrode uncoated area 215. That is, the electrode portion 410 may comprise a material having a higher electrical conductivity than the first electrode current collector 211 to further facilitate dissipation of the electric current upon the penetration of a sharp object into the battery. For this purpose, the electrode portion 410 may be thinner than the first electrode current collector 211, resulting in a reduced overall size of the electrode assembly. As a result, it is possible to achieve effective inhibition of short-circuiting of the battery as well as a further increased capacity of the lithium secondary battery by reducing the size of the electrode assembly 200.

Hereinafter, the operation of a can type secondary battery in accordance with respective embodiments will be described in more detail.

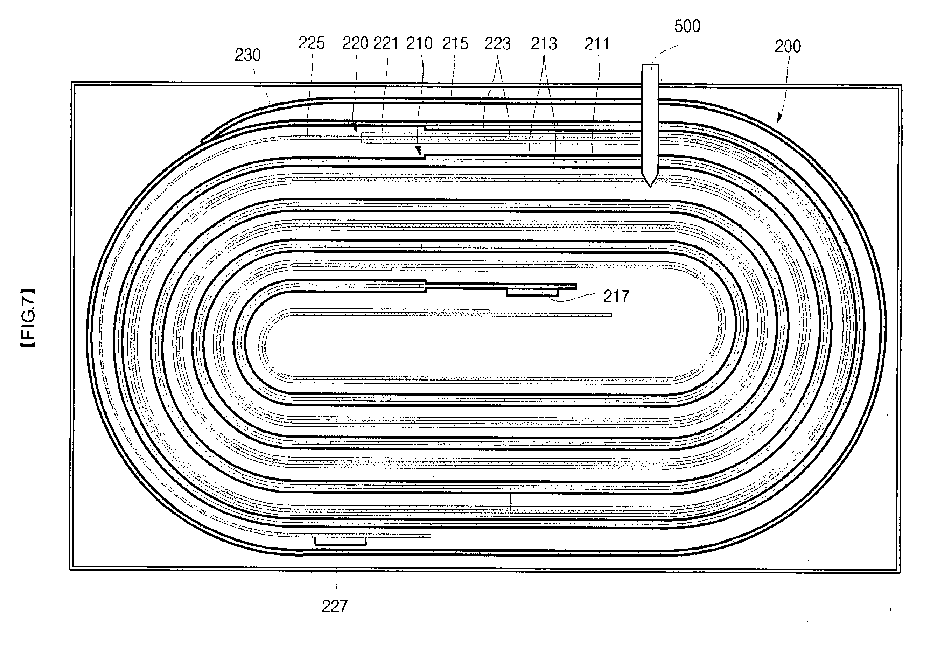

FIG. 7 is a sectional view schematically showing a nail penetration test for a lithium secondary battery.

FIG. 7 shows a nail 500 penetrated into the can 100 and into the electrode assembly 200. The nail 500 penetrates into the first electrode plate 210 and the second electrode plate 220, thus causing a short-circuit between the first electrode plate 210 and the second electrode plate 220. At the same time, the nail pin 500 penetrates into the can 100 and the first electrode plate 210, which have an opposite polarity to each other.

In the lithium secondary battery in accordance with the embodiments discussed above, the outermost turn of the first electrode plate 210 is comprised of the first electrode uncoated area 215 or the short-circuiting part 400 extending from the first electrode plate 210, and the ceramic separator 230 coated on the electrode plate. Therefore, the stability of the lithium secondary battery is significantly enhanced, due to the formation of a path through which an electric current dissipates into the can even more smoothly while preventing the propagation of internal short-circuiting upon the penetration of the nail 500 into the lithium secondary battery.

### EXAMPLES

Now, certain embodiments will be described in more detail with reference to the following Examples. These examples are provided only for illustration and should not be construed as limiting.

### EXAMPLE 1 AND COMPARATIVE EXAMPLES 1 TO 3

A nail penetration test for a lithium secondary battery was conducted under severe conditions, e.g., a penetration rate of 5 mm/s, a 2.5 mmΦ thick nail, and a voltage of 4.31 V. The lithium secondary batteries were each subjected to the nail penetration tests 100 times. The results for occurrence of ignition (%) in the battery are given in Table 1 below.

**TABLE 1**

| | | | | |
|---|---|---|---|---|
| | *Comp. Ex. 1* | *Comp. Ex. 2* | *Comp. Ex. 3* | *Ex. 1* |
| Ignition (%) | 100 | 75 | 73.3 | 0 |

Comparative Example 1 is a common secondary battery in which a typical separator was used and the outermost 1 turn of an electrode assembly was not only of an electrode uncoated area, i.e. the outermost part of the first electrode plate included the electrode collector as well as the active layer. The electrode plate was coated with a conventional separator, which did not contain a ceramic material.

Comparative Example 2 is a secondary battery in which a typical separator was used and the outermost 1 turn of an electrode assembly was only an electrode uncoated area, i.e. the outermost part of the first electrode plate consisted of only the electrode collector. The electrode collector was coated with a conventional separator, which did not contain a ceramic material.

Comparative Example 3 is a secondary battery in which a ceramic separator was used, but the outermost 1 turn of an electrode assembly was not only of an electrode uncoated area, i.e. the outermost part of the first electrode plate included the electrode collector as well as the active layer. The electrode plate was coated with a separator, which contained a ceramic material.

Example 1 is a secondary battery in which a ceramic separator was used and the outermost 1 turn of an electrode assembly comprised only of an electrode uncoated area, i.e. the outermost part of the first electrode plate consisted of only the electrode collector. The electrode plate was coated with a separator, which contained a ceramic material.

As can be seen from the results of Table 1, the common secondary battery of Comparative Example 1 exhibited 100% ignition under the above-specified conditions, e.g., severe conditions. Further, it can be seen that the frequency of ignition is still high in batteries of Comparative Examples 2 and 3 in which only the ceramic separator was used or the outermost 1 turn of an electrode assembly was only of an electrode uncoated area, even though a decrease in ignition was observed to some extent.

On the other hand, it can be seen that Example 1 exhibited no ignition of the secondary battery even under the above-specified severe conditions. That is, the stability of the lithium secondary battery upon the penetration of a sharp object into the secondary battery was significantly enhanced, due to combination of the effects obtained when the ceramic separator was applied with the effects obtained when the outermost 1 turn of an electrode assembly was formed of an electrode uncoated area.

## Claims

1. A lithium secondary battery (1000), comprising:
an electrode assembly (200) comprising a first electrode plate (210), a second electrode plate (220), and a separator (230) being disposed between the first electrode plate (210) and the second electrode plate (220), wound together such that an outermost portion of the first electrode plate (210) is disposed farther outside the electrode assembly (200) than an outermost part of the second electrode plate (220), wherein a polarity of the first electrode plate (210) is opposite to a polarity of the can (100); and
a can (100) dimensioned and configured for receiving the electrode assembly (200), **characterized in that**
the separator (230) comprises a ceramic material,
the first electrode plate (210) comprises an electrode current collector (211) and an electrode active material layer (213) coated thereon, and
at least 1 turn of an outermost portion of the first electrode plate (210) consists of only the electrode current collector (211) and the separator (230).

2. The battery according to claim 1, wherein a shortest distance from the outermost 1 turn of the first electrode plate (210) to the can (100) has a substantially constant value around a circumference of the can (100).

3. The battery according to claim 2, wherein a tangent plane to the outermost 1 turn of the first electrode plate (210) and a tangent plane at a point of the can (100), joined by an imaginary line defining the shortest distance therebetween, are substantially parallel to each other.

4. The battery according to any of the preceding claims, wherein the separator (230) is made of a porous film comprising the ceramic material and a binder.

5. The battery according to any of the preceding claims, wherein the ceramic material is at least one of silica (SiO₂), alumina (Al₂O₃), zirconium oxide (ZrO₂) or titanium oxide (TiO₂).

6. A lithium secondary battery (1000), comprising:
an electrode assembly (200) comprising a first electrode plate (210), a second electrode plate (220), and a separator (230) disposed between the first electrode plate (210) and the second electrode plate (220), wound together such that an outermost portion of the first electrode plate (210) is disposed farther outside the electrode assembly (200) than an outermost part of the second electrode plate (220); and
a can (100) dimensioned and configured for receiving the electrode assembly (200), wherein a polarity of the first electrode plate (210) is opposite to a polarity of the can (100);
**characterized in that**
the lithium secondary battery (1000) further comprises a short-circuiting part (400) coupled to an outermost portion of the first electrode plate (210), wherein the short-circuiting part (400) surrounds by at least one turn the outermost portion of the electrode assembly (200) and comprises an - electrode portion (410) and an insulating portion (430) coated thereon.

7. The battery according to claim 6, wherein a shortest distance from the outermost 1 turn of the electrode portion (410) to the can (100) has a substantially constant value around a circumference of the can (100).

8. The battery according to claim 7, wherein a tangent plane to the outermost 1 turn of the electrode portion (410) and a tangent plane at a point of the can (100), joined by an imaginary line defining the shortest distance therebetween, are substantially parallel to each other.

9. The battery according to any of claims 6 through 8, wherein the insulating portion (430) is made of a porous film comprising the ceramic material and a binder.

10. The battery according to claim 9, wherein the ceramic material is at least one of silica (SiO₂), alumina (Al₂O₃), zirconium oxide (ZrO₂) or titanium oxide (TiO₂).

11. The battery according to claims 9 or 10, wherein the insulating portion (430) and the separator (230) are made of the same material.

12. The battery according to any of claims 6 through 11, wherein the insulating portion (430) is adjacent to and contacting the outermost end of the separator (230) and the electrode portion (410) is adjacent to and contacting the first electrode plate (220).

13. The battery according to any of claims 6 through 12, wherein the first electrode plate (210) comprises an electrode current collector (211) and an electrode active material layer (213) coated thereon and the electrode portion (410) is thicker than the current collector (211) of the first electrode plate (210).

14. The battery according any of claims 6 through 12, wherein the first electrode plate (210) comprises an electrode current collector (211) and an electrode active material layer (213) coated thereon and the electrode portion (410) is made of a material having a higher electrical conductivity than the current collector (211) of the first electrode plate (210).

15. The battery according to claim 14, wherein the electrode portion (410) is thinner than the current collector (211) of the first electrode plate (210).

16. The battery according to claim 6, wherein the electrode portion and the current collector of the first electrode plate comprise the same material.

## Patentansprüche

1. Eine Lithium-Sekundärbatterie (1000), umfassend:
eine Elektrodenanordnung (200), umfassend eine erste Elektrodenplatte (210), eine zweite Elektrodenplatte (220) sowie einen zwischen der ersten Elektrodenplatte (210) und der zweiten Elektrodenplatte (220) angeordneten Separator (230), die derart gemeinsam gewickelt sind, dass ein äußerster Teil der ersten Elektrodenplatte (210) weiter außerhalb der Elektrodenanordnung (200) angeordnet ist als ein äußerster Teil der zweiten Elektrodenplatte (220), wobei eine Polarität der ersten Elektrodenplatte (210) einer Polarität des Bechers (100) entgegengesetzt ist; und
einen Becher (100), der zum Aufnehmen der Elektrodenanordnung (200) dimensioniert und konfiguriert ist, **dadurch gekennzeichnet, dass**
der Separator (230) ein Keramikmaterial umfasst,
die erste Elektrodenplatte (210) einen Elektrodenstromkollektor (211) sowie eine darauf aufgetragene Elektrodenschicht aktiven Materials (213) umfasst und
mindestens 1 Windung eines äußersten Teils der ersten Elektrodenplatte (210) aus nur dem Elektrodenstromkollektor (211) und dem Separator (230) besteht.

2. Die Batterie gemäß Anspruch 1, wobei ein kürzester Abstand von der äußersten 1 Windung der ersten Elektrodenplatte (210) zu dem Becher (100) um einen Umfang des Bechers (100) einen im Wesentlichen konstanten Wert aufweist.

3. Die Batterie gemäß Anspruch 2, wobei eine Tangentialebene zu der äußersten 1 Windung der ersten Elektrodenplatte (210) und eine Tangentialebene an einem Punkt des Bechers (100), die durch eine den kürzesten Abstand dazwischen definierende imaginäre Gerade verbunden sind, im Wesentlichen parallel zueinander sind.

4. Die Batterie gemäß irgendeinem der vorhergehenden Ansprüche, wobei der Separator (230) aus einem porösen Film hergestellt ist, der das Keramikmaterial sowie ein Bindemittel umfasst.

5. Die Batterie gemäß irgendeinem der vorhergehenden Ansprüche, wobei das Keramikmaterial mindestens eines von Siliziumdioxid (SiO₂), Aluminiumoxid (Al₂O₃), Zirkoniumoxid (ZrO₂) oder Titanoxid (TiO₂) ist.

6. Eine Lithium-Sekundärbatterie (1000), umfassend:
eine Elektrodenanordnung (200), umfassend eine erste Elektrodenplatte (210), eine zweite Elektrodenplatte (220) sowie einen zwischen der ersten Elektrodenplatte (210) und der zweiten Elektrodenplatte (220) angeordneten Separator (230), die derart gemeinsam gewickelt sind, dass ein äußerster Teil der ersten Elektrodenplatte (210) weiter außerhalb der Elektrodenanordnung (200) angeordnet ist als ein äußerster Teil der zweiten Elektrodenplatte (220); und
einen Becher (100), der zum Aufnehmen der Elektrodenanordnung (200) dimensioniert und konfiguriert ist, wobei eine Polarität der ersten Elektrodenplatte (210) einer Polarität des Bechers (100) entgegengesetzt ist;
**dadurch gekennzeichnet, dass**
die Lithium-Sekundärbatterie (1000) ferner einen Kurzschlussteil (400) umfasst, der mit einem äußersten Teil der ersten Elektrodenplatte (210) verbunden ist, wobei der Kurzschlussteil (400) um mindestens eine Windung den äußersten Teil der Elektrodenanordnung (200) umgibt und einen Elektrodenteil (410) sowie einen darauf aufgetragenen Isolierteil (430) umfasst.

7. Die Batterie gemäß Anspruch 6, wobei ein kürzester Abstand von der äußersten 1 Windung des Elektrodenteils (410) zu dem Becher (100) um einen Umfang des Bechers (100) einen im Wesentlichen konstanten Wert aufweist.

8. Die Batterie gemäß Anspruch 7, wobei eine Tangentialebene zu der äußersten 1 Windung des Elektrodenteils (410) und eine Tangentialebene an einem Punkt des Bechers (100), die durch eine den kürzesten Abstand dazwischen definierende imaginäre Gerade verbunden sind, im Wesentlichen parallel zueinander sind.

9. Die Batterie gemäß irgendeinem der Ansprüche 6 bis 8, wobei der Isolierteil (430) aus einem porösen Film hergestellt ist, der das Keramikmaterial sowie ein Bindemittel umfasst.

10. Die Batterie gemäß Anspruch 9, wobei das Keramikmaterial mindestens eines von Siliziumdioxid (SiO₂), Aluminiumoxid (Al₂O₃), Zirkoniumoxid (ZrO₂) oder Titanoxid (TiO₂) ist.

11. Die Batterie gemäß Ansprüchen 9 oder 10, wobei der Isolierteil (430) und der Separator (230) aus demselben Material hergestellt sind.

12. Die Batterie gemäß irgendeinem der Ansprüche 6 bis 11, wobei der Isolierteil (430) mit dem äußersten Ende des Separators (230) benachbart ist und mit diesem in Kontakt steht und der Elektrodenteil (410) mit der ersten Elektrodenplatte (220) benachbart ist und mit dieser in Kontakt steht.

13. Die Batterie gemäß irgendeinem der Ansprüche 6 bis 12, wobei die erste Elektrodenplatte (210) einen Elektrodenstromkollektor (211) sowie eine darauf aufgetragene Elektrodenschicht aktiven Materials (213) umfasst und der Elektrodenteil (410) dicker ist als der Stromkollektor (211) der ersten Elektrodenplatte (210).

14. Die Batterie gemäß irgendeinem der Ansprüche 6 bis 12, wobei die erste Elektrodenplatte einen Elektrodenstromkollektor (211) sowie eine darauf aufgetragene Elektrodenschicht aktiven Materials (213) umfasst und der Elektrodenteil (410) aus einem Material hergestellt ist, das eine höhere elektrische Leitfähigkeit aufweist als der Stromkollektor (211) der ersten Elektrodenplatte (210).

15. Die Batterie gemäß Anspruch 14, wobei der Elektrodenteil (410) dünner als der Stromkollektor (211) der ersten Elektrodenplatte (210) ist.

16. Die Batterie gemäß Anspruch 6, wobei der Elektrodenteil und der Stromkollektor der ersten Elektrodenplatte dasselbe Material umfassen.

## Revendications

1. Batterie rechargeable au lithium (1000), comprenant :
un ensemble d'électrodes (200) comprenant une première plaque d'électrodes (210), une seconde plaque d'électrodes (220), et un séparateur (230) étant disposé entre la première plaque d'électrodes (210) et la seconde plaque d'électrodes (220), enroulées entre elles de sorte qu'une position la plus à l'extérieur de la première plaque d'électrodes (210) soit disposée plus loin à l'extérieur de l'ensemble d'électrodes (200) qu'une partie la plus à l'extérieur de la seconde plaque d'électrodes (220), une polarité de la première plaque d'électrodes (210) étant opposée à une polarité du bac (100) ; et
un bac (100) dimensionné et configuré pour recevoir l'ensemble d'électrodes (200), **caractérisée en ce que**
le séparateur (230) comprend un matériau céramique,
la première plaque d'électrodes (210) comprend un collecteur de courant d'électrodes (211) et une couche de matériau actif d'électrodes (213) appliquée dessus par revêtement, et
au moins un tour d'une partie la plus à l'extérieur de la première plaque d'électrodes (210) est uniquement constitué du collecteur de courant d'électrodes (211) et du séparateur (230).

2. Batterie selon la revendication 1, dans laquelle une distance la plus courte du tour le plus à l'extérieur de la première plaque d'électrodes (210) au bac (100) a une valeur sensiblement constante autour d'une circonférence du bac (100).

3. Batterie selon la revendication 2, dans laquelle un plan tangent au tour le plus à l'extérieur de la première plaque d'électrodes (210) et un plan tangent à un point du bac (100), joints par une ligne imaginaire définissant la distance la plus courte entre eux, sont sensiblement parallèles entre eux.

4. Batterie selon l'une quelconque des revendications précédentes, dans laquelle le séparateur (230) est réalisé en un film poreux comprenant le matériau céramique et un liant.

5. Batterie selon l'une quelconque des revendications précédentes, dans laquelle le matériau céramique est au moins l'un de dioxyde de silicium (SiO₂), alumine (Al₂O₃), oxyde de zirconium (ZrO₂) ou dioxyde de titane (TiO₂).

6. Batterie rechargeable au lithium (1000), comprenant :
un ensemble d'électrodes (200) comprenant une première plaque d'électrodes (210), une seconde plaque d'électrodes (220), et un séparateur (230) disposé entre la première plaque d'électrodes (210) et la seconde plaque d'électrodes (220), enroulées entre elles de sorte qu'une portion la plus à l'extérieur de la première plaque d'électrodes (210) soit disposée plus loin à l'extérieur de l'ensemble d'électrodes (200) qu'une partie la plus à l'extérieur de la seconde plaque d'électrodes (220) ; et
un bac (100) dimensionné et configuré pour recevoir l'ensemble d'électrodes (200), une polarité de la première plaque d'électrodes (210) étant opposée à une polarité du bac (100) ;
ladite batterie rechargeable au lithium (1000) étant **caractérisée en ce que**
elle comprend en outre une partie de court-circuit (400) couplée à une portion la plus à l'extérieur de la première plaque d'électrodes (210), dans laquelle la partie de court-circuit (400) entoure par au moins un tour la portion la plus à l'extérieur de l'ensemble d'électrodes (200) et comprend une portion d'électrodes (410) et une portion d'isolation (430) appliquées dessus par revêtement.

7. Batterie selon la revendication 6, dans laquelle une distance la plus courte du tour le plus à l'extérieur de la portion d'électrodes (410) au bac (100) a une valeur sensiblement constante autour d'une circonférence du bac (100).

8. Batterie selon la revendication 7, dans laquelle un plan tangent au tour le plus à l'extérieur de la portion d'électrodes (410) et un plan tangent à un point du bac (100), joints par une ligne imaginaire définissant la distance la plus courte entre eux, sont sensiblement parallèles entre eux.

9. Batterie selon l'une quelconque des revendications 6 à 8, dans laquelle la portion d'isolation (430) est réalisée en un film poreux comprenant le matériau céramique et un liant.

10. Batterie selon la revendication 9, dans laquelle le matériau céramique est au moins l'un de dioxyde de silicium (SiO₂), alumine (Al₂O₃), oxyde de zirconium (ZrO₂) ou dioxyde de titane (TiO₂).

11. Batterie selon la revendication 9 ou 10, dans laquelle la portion d'isolation (430) et le séparateur (230) sont réalisés en le même matériau.

12. Batterie selon l'une quelconque des revendications 6 à 11, dans laquelle la portion d'isolation (430) est adjacente à l'extrémité la plus à l'extérieur du séparateur (230) et est en contact avec elle, et la portion d'électrodes (410) est adjacente à la première plaque d'électrodes (220) et est en contact avec elle.

13. Batterie selon l'une quelconque des revendications 6 à 12, dans laquelle la première plaque d'électrodes (210) comprend un collecteur de courant d'électrodes (211) et une couche de matériau actif d'électrodes (213) appliquée dessus par revêtement, et la portion d'électrodes (410) est plus épaisse que le collecteur de courant (211) de la première plaque d'électrodes (210).

14. Batterie selon l'une quelconque des revendications 6 à 12, dans laquelle la première plaque d'électrodes (210) comprend un collecteur de courant d'électrodes (211) et une couche de matériau actif d'électrodes (213) appliquée dessus par revêtement, et la partie d'électrodes (410) est réalisée en un matériau ayant une conductivité électrique plus élevée que le collecteur de courant (211) de la première plaque d'électrodes (210).

15. Batterie selon la revendication 14, dans laquelle la portion d'électrodes (410) est plus fine que le collecteur de courant (211) de la première plaque d'électrodes (210).

16. Batterie selon la revendication 6, dans laquelle la portion d'électrodes et le collecteur de courant de la première plaque d'électrodes sont constitués du même matériau.
